# EUROPEAN PATENT SPECIFICATION

(11) **EP 4 632 851 B1**
(45) Date of publication and mention of the grant of the patent: **28.10.2026**
(21) Application number: 24169850.5
(22) Date of filing: 12.04.2024
(51) Int. Cl.: H01M 8/026, H01M 8/10, H01M 8/0263, H01M 8/2483, H01M 8/04089

(54) **FUEL CELL PLATE WITH ACTIVE TRANSITION REGION FROM ENLARGED PILLARS**
BRENNSTOFFZELLENPLATTE MIT AKTIVEM ÜBERGANGSBEREICH AUS VERGRÖSSERTEN SÄULEN
PLAQUE DE PILE À COMBUSTIBLE AVEC ZONE DE TRANSITION ACTIVE À PARTIR DE PILIERS ÉLARGIS

(43) Date of publication of application: 15.10.2025
(73) Proprietor: AVL List GmbH, 8020 Graz (AT); AVL Fuel Cell Canada Inc, Burnaby, British Columbia V5A 4W2 (CA)
(72) Inventor: Raibeck, Laura, Vancouver, V5N 4G2 (CA); Lerch, Matthias, 8020 Graz (AT); Pöschl, Robert, 8111 Gratwein-Straßengel (AT)
(74) Representative: Gamper, Bettina

(56) References cited:
- EP-B1- 2 859 606
- CN-A- 1 342 333
- US-A1- 2020 212 470
- US-B2- 9 391 332

## Description

The present invention is related to a plate device for an electrochemical fuel cell, a fuel cell with at least one of those plate devices as well as a fuel cell stack comprising several inventive fuel cells.

It is commonly known that a fuel cell stack comprises several fuel cells which are stacked upon each other. To provide an efficient construction each of those fuel cells can have several fuel cell plate devices being adjacent to each other and having an electrochemical functionality provided by a membrane in between. Those plate devices have the functionality to take on a fluid flow, provide the distribution of the fluid flow over the membrane, collect the fluid flow downstream of the membrane and transport the fluid flow away from the membrane. To have a minimized geometrical extension and an increased efficiency those plate devices are in general of a plate shape meaning having a plate form with a relatively small geometrical thickness.

One disadvantage of the present solutions is the fact that there is a transition section necessary between the ports and the central section which can also be considered being the active electrochemical functionality area. While the central section of those plates is aligned with the membrane to provide the electrochemical functionality meaning that fluid is provided on both sides of that central section of a membrane and thereby the electrochemical functionality can be provided, the transition section is usually remained passive. Those transition sections are necessary to take on the fluid flow from an inlet port and distribute it to the wider central section. On the other side of the central section a collection of the spread-out fluid flow is necessary to collect it and guide it to a smaller outlet port to transport fluid flow away from the membrane. **It** is of high importance that the fluid flow is guided and provided in a secure manner to ensure that the electrochemical reaction at the active area of the membrane is not blocked by the lack of fluid or any blockage at the outlet port. Due to the fact that the transition areas as well as the transition sections as well as the ports are not taking part of the electrochemical functionality of the fluid cell those sections can be considered as inactive or passive in respect to the functionality of the fuel cell. In other words, those passive sections do not contribute to the fuel cell functionality and remain an inactive or passive part of the geometry of the plate. Thereby those parts provide and need space and volume without delivering any additional efficiency to generate the electrochemical fuel cell functionality. Additionally, those inactive areas reduce the power density of the fuel cell stack.

It is an object of the present invention to solve aforesaid problems at least partly. In particular it is an object of the present invention to provide a plate device for a fuel cell with an increased efficiency and an optimized space usage for providing electrochemical fuel cell functionality.

Aforesaid object is achieved with a plate device with the features according to independent claim 1, a fuel cell with the features of independent claim 11 as well as fuel cell stack with the features of independent claim 13. Further features of the sub claims can be combined freely with each other if of technical sense.

According to the present invention the plate device is meant for an electrochemical fuel cell in a fuel cell stack. Such plate device comprises at least one inlet port for receiving a fluid flow within the fuel cell stack. Downstream of the at least one inlet port an inlet transition section is provided for each inlet port receiving the fluid flow from the at least one inlet port and distributing it to a central section. The central section is located downstream of the inlet transition section and is able to provide the electrochemical fuel cell functionality. Further downstream the central section an outlet transition section is provided for each inlet port for receiving the fluid flow from the central section. After having received the fluid flow, the outlet transition section is guiding that fluid flow to the at least one outlet port. Furthermore, the inlet transition section as well as the outlet transition section comprise guiding means for guiding the fluid flow across the inlet transition section and the outlet transition section.

An inventive plate device is characterised in that the inlet transition section and/or the outlet transition section comprise at least one activation area additionally providing the electrochemical fuel cell functionality. That activation area is separate from the regular area of the inlet transition section and/or the outlet transition section. Furthermore, the guiding means and the activation area comprise an activation contact surface to contact an adjacent membrane of the fuel cell. That activation contact surface is greater than a regular contact surface of the guiding means in the regular area. Thereby the area of the transition section that is active in terms of providing the fuel cell functionality is increased.

The present invention uses the general geometry and functionality of commonly known plate devices. It also includes a flow via an inlet port, an inlet transition section to a central section to provide and generate the electrochemical fuel cell functionality. According to the present invention an electrochemical fuel cell functionality can be an electrolytic fuel generating functionality and/or an electric energy producing fuel cell functionality as well. Downstream of the central section according to commonly known plate devices the fluid flow is collected by the outlet transition section and transported out of the fuel cell stack via the outlet port of the plate device.

According to the present invention now an additional efficiency can be generated in particular by activating at least parts of the transition sections. The activation of the transition sections is understood to be active in the meaning of providing additional electrochemical functionality in that area of the transition section. To provide additional electrical functionality several needs have to be fulfilled. Beside the fact that the membrane needs to be in contact with the fluid flow in the active part of the transition section additional thermal and electrical conductivity needs to be provided. In previously known plate devices, with pillar arrays for transition regions, due to the lack of contact surface between the usually small guiding means in the form of pillars and the adjacent membrane (MEA), thermal connectivity and electrical connectivity was not sufficient. Since for providing electrochemical functionality with good performance and without hotspots at the membrane (MEA), a minimum amount of electrical conductivity as well as thermal connectivity is necessary by having guiding means with a significantly increased activation contact surface in comparison to a regular contact surface. That increased surface leads to an optimized thermal conductivity as well as to an optimized electrical conductivity to the membrane.

In other words, inside of the inlet transition section and/or the outlet transition section at least one activation area can be defined by specifically adapted guiding means. The guiding means for example in the form of pillars in the activation area of the transition section are different from the guiding means for example in the form of pillars in the regular area of the transition section thereby forming a non-active part of the transition section by at least one geometrical parameter, namely the contact surface for example in the form of a diameter. By having an increased activation contact surface that increased activation contact surface can provide the additional contact surface for example in the form of an increase pillar diameter touching the membrane (MEA). By having an increased section for that contact, the amount of heat that is transferable as well as the amount of electrical current being transferrable over the membrane is increased significantly. Again, in other words the increased contact surface leads to an increased electrical and thermal conductivity in the activation area being the active part of the transition section. By having now an increased thermal and electrical conductivity in the active part of the transition section, the circumstances have been changed in comparison to commonly known plate devices such that now the membrane can be placed also in gaseous contact inside at least the activation area. That leads to a situation where the thermal and electrical conductivity over the membrane also in this part of the transition section is high enough to provide additional electrochemical functionality also in this part of the transition section.

Comparing the present invention with commonly known plate devices this leads to a situation where previously passive transition sections now can participate in the activity of providing the electrochemical fuel cell functionality. In comparison between an inventive and a commonly known plate device this leads to a situation where this increased overall surface for providing this active electrochemical fuel cell functionality is optimized without increasing the overall dimensions of the plate device. The overall amount and percentage of the active area or active geometrical extension of the plate device is thereby increased and thereby the overall efficiency, power density and space usage are increased compared with commonly known plate devices. Furthermore, the functionality of distributing the fluid flow in particular to the full width of the plate and collecting the fluid flow to exit the cell is kept since the guiding means are still available and provided also inside the activation area of the respective transition section.

It can be of advantage if according to the present invention the plate device is characterised in that the activation area extends between the at least one inlet port and/or the at least one outlet port on one side and at least a part of the central section on the other side. This has to be understood that the activation area extends along the fuel flow direction from the inlet port to the central section. In other words, this helps to optimise and in particular increase or even maximise the activation area in terms of the overall extension and dimension of the respective transition section. The bigger the activation area is provided the higher the increase in energy providing density and functionality efficiency can be achieved.

It is further an advantage if according to the present invention the plate device is characterised in that the guiding means in the activation area have different geometrical form, in particular forming guiding channels, than the guiding means in the regular area, in particular forming guiding pillars. Since in general the geometrical form of the guiding means is free, the guiding means in the activation area can form guiding channels thereby providing a more specific guiding functionality. In particular the distribution in form of a balanced way can be optimized such that the fluid flow is distributed as even as possible over the wider central section. By having guiding channels, together with pillar features, those guiding channels provide by the geometrical form itself an increased contact surface compared to a smaller and in particular circular contact surface of the guiding surface of the guiding pillars in the regular area being the non-active part of the transition section.

It is further an advantage if according to the present invention the plate device is characterised in that the guiding means are shaped in a pillar form and/or arranged in a square array. This can be true for the regular area and/or for the activation area. Having guiding means in form of guiding pillars leads to a very easy and cost-efficient construction and production method. In particular already existing production methods can be used since they usually rely on a pillar form for the guiding means. Additionally, the arrangement in a square array allows a relatively simple and easy way of construction and optimisation by using a flow simulation method for example a CFD computer algorithm, to determine optimal pillar diameters. Thereby having the pillar form in combination with a square array leads to an easy and cost-efficient way to optimise as well as to produce an inventive plate device.

It is a further advantage if according to the present invention the plate device is characterised in that the activation area is geometrically correlated with central channels being provided in the central section to guide the fluid flow, in particular together with pillars on the outer edges of the active transition region. Those central channels lead to a further optimized and defined fluid flow in a guided way through the central section, as well as increased contact with the membrane (MEA) for electrical and thermal conduction. Any undesired turbulences or undesired back flow of the fluid inside of the central section can thereby be avoided or at least minimized. By aligning the activation area with the center of channels in particular by aligning channel forming guiding means in the activation area with a respective orientation of the central channels a further optimization as to the fluid flow can be achieved by keeping the increased efficiency by having the increased activation functionality of the electrochemical fuel cell functionality.

It is a further advantage if according to the present invention the plate device is characterised in that at least two activation areas are provided within at least one of the inlet transition section and/or the outlet transition section. By having two or even more activation areas a more sophisticated activation strategy can be applied and used inside of the respective transition section and thus all activation areas increase the overall active area of the respective fuel cell. The increased flow resistance can for example be providing a bypass blockage or a reduction so that a free and open range of the geometrical guiding means can provide a better balance for an even distribution as well as an even collection of the fluid flow in the inlet transition section and/or the outlet transition section. By having more than one activation area and thus a larger active area the overall efficiency with an increased activation area is the result. In other words, it is advantageously if there are two regions of extension into transitions section from the existing active area.

A further advantage can be achieved if according to the present invention the plate device is characterised in that the activation area covers between 30% and 90%, preferably between 40% and 80% of the inlet transition section and/or the outlet transition section. By having an increased percentage of the activation area being part of the respective transition section an increased overall efficiency can be achieved. In particular by increasing the space taken on by the activation area the increase of the efficiency can be correlated. Furthermore, by having an increased percentage of the activation area the positive effect on the fluid flow optimization can also be increased by that construction embodiment. Of course, it is also possible that the complete transition section is embodied in the form of an activation area thereby maximizing the additional active region of the fuel cell.

It is a further advantage if according to the present invention the plate device is characterised in that the inlet section and the outlet section both comprise at least one extension of the activation area. In other words, the active area of the overall plate device is increased not only to one of the transition sections but over at least parts of both of the transition sections. The active area of the central section together with the activation areas of the transition sections forms the total active area of the respective fuel cell. By this increased balance in distribution as well as an increased balance in collection in both transition sections the overall efficiency can be optimized and increased even further. Overall, the activation surface for the complete plate device thereby is able to extend over the central section not only into one transition section but into both transition sections increasing the overall efficiency and power density.

It is further of advantage if according to the present invention the plate device is characterised in that the at least one activation area of the inlet section has an identical or in general identical geometrical extension as the activation area of the outlet transition section, in particular having identical or in general identical geometrical forms of the guiding means. This leads to the same concept for both ends of the fluid flow meaning an easy and cost-efficient way of production for the whole plate device. In particular by having identical or general identical forms of the guiding means the same construction idea as well as the same production method can be applied to all of those guiding means. Also, the respective fluid influence is the same for the distribution in the inlet transition section as well as the collection at the outlet transition section.

It is a further advantage if according to the present invention the plate device is characterised in that between the activation area and the regular area of the inlet transition section and/or the outlet transition section an intermediate area is provided having guiding means with changing intermediate contact surfaces changing from the regular contact surface to the activation contact surface. In other words, there is a stepwise or continuous change in the contact surfaces from the regular area to the activation area by passing through the intermediate area. That intermediate area in particular has similar, identical or in general identical forms for the guiding means as in one of the adjacent areas like the activation area and/or the regular area. By having that intermediate or transition of the contact surfaces the harmonization and balance of the fluid flow flowing and being distributed at or collected through the respective part of the transition section is optimized even further.

It is a further object of the present invention to provide a fuel cell providing an electrochemical fuel cell functionality. That fuel cell has an electrochemical membrane and is characterised by having one inventive plate device on both sides of the membrane. In other words, now the fuel cell is provided with inventive constructions of plate devices and thereby that fuel cell comes along with the same advantages in particular with the increased overall efficiency of the electrochemical fuel cell functionality as discussed in detail with respect to the plate device.

It is a further advantage if an inventive fuel cell is characterised in that the membrane provides functionality area which provides the electrochemical fuel cell functionality. That functionality area covers at least partly the inlet transition section and/or the outlet transition section. In other words, the functionality area is created by the central section as well as the at least one activation area in one of the transition sections. As it can be seen in this embodiment the increase of the amount of the electrical extension of activation area increases the overall surface of the functionality area and thereby increases and in particular optimizes the overall efficiency providing the electrochemical fuel cell functionality.

It can be of advantage if an inventive fuel cell is characterised in that the functionality area extends across the at least one activation area, in particular not across the regular area. By increasing the extension of the functionality area, for example by increasing the extension of the membrane, a simple and easy way is provided to increase the power density provided by an inventive fuel cell. By focusing the functionality area only on the active areas of the transition sections, any undesired hot spots in the regular can be avoided.

It can be of advantage if an inventive fuel cell is characterised in that both plate devices comprise corresponding activation areas. In other words, the activation areas correspond in terms of geometrical extension and geometrical position such that they overlap at least partly. This provides the beneficial effects for thermal and electrical conductivity to both sides of the fuel sell, in particular to the anode side as well as the cathode side.

It is a further object of the present invention to provide a fuel cell stack having multiple fuel cells stacked upon each other to provide an electrochemical fuel cell functionality. Such a fuel cell stack is characterised by having at least some fuel cells with the features according to the present invention to be stacked upon each other. Thereby, an inventive fuel cell stack comes along with the same advantages as discussed in detail with respect to the inventive fuel cell and/or with respect to the inventive plate device.

The present invention is further described with respect to the accompanying drawings with show schematically:
- Fig. 1: a commonly known plate device according to the state of the art,
- Fig. 2: an embodiment of an inventive plate device,
- Fig. 3: a further embodiment of an inventive plate device,
- Fig. 4: a further embodiment of an inventive plate device,
- Fig. 5: a further embodiment of an inventive plate device,
- Fig. 6: a further embodiment of an inventive plate device,
- Fig. 7: a further embodiment of an inventive plate device,
- Fig. 8: an embodiment of an inventive fuel cell and
- Fig. 9: an embodiment of an inventive fuel cell stack.

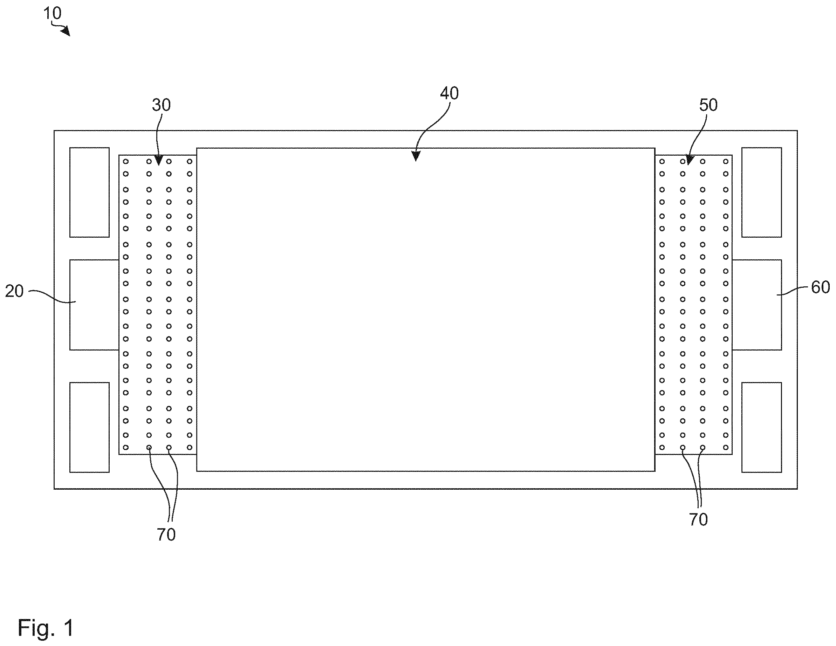

Figure 1 shows an example for a state of the art plate device 10 which forms the basis of the present invention. It comprises in general in plate form a central section 40 to provide the electrochemical functionality. Upstream of the central section 40 an inlet transition section 30 and downstream the central section 40 an outlet transition section 50 is provided. To distribute fluid flow FF from an inlet port 20 guiding means 70 in pillar form are distributed in a square array in the inlet transition section 30. Those guiding means lead to a more or less balanced distribution of fluid flow FF (not depicted) to the central section 40. Downstream of the central section 40 the fluid flow FF is collected and also guided by the same, pillar formed guiding means 70 to be then distributed to the outlet port 60. As it can be seen in figure 1 the inlet transition section 30 and the outlet transition section 50 remain to be passive sections in terms of not being able to provide the electrochemical fuel cell functionality. This is in particular true due to the fact that the guiding means 70 have a relatively small (not depicted) contact surface and thereby are not able to provide a sufficient electric and/or thermal conductivity to a not depicted adjacent plate 10.

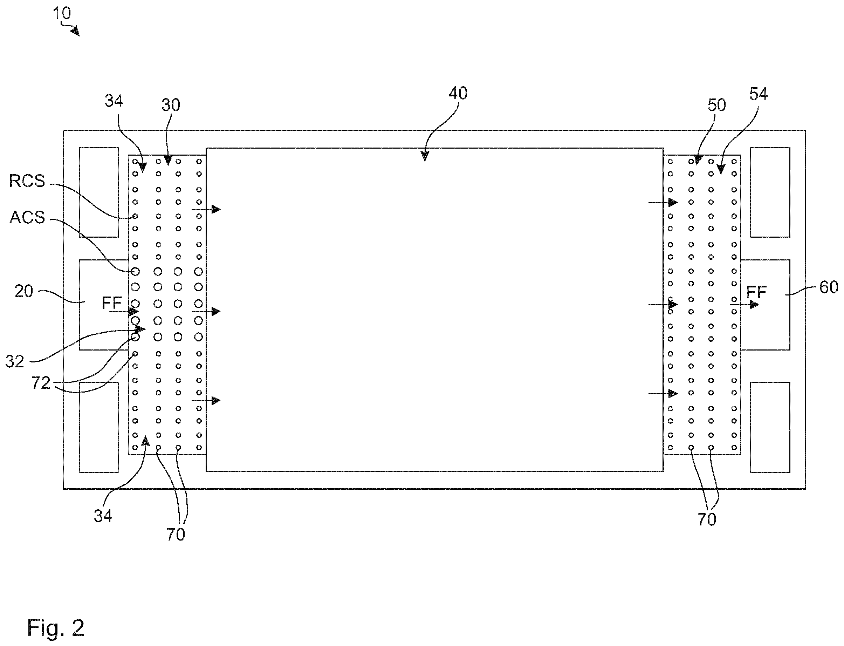

Figure 2 shows one embodiment of an inventive plate device. This is based on the functionality and the general embodiment of figure 1 according to the state of the art.

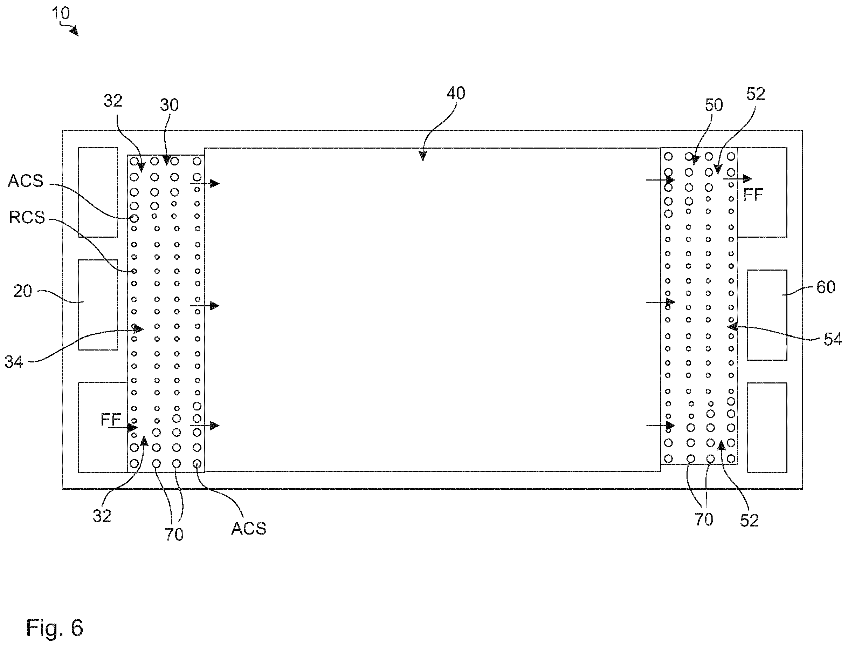

However, in an embodiment according to figure 2 the inlet transition section 30 now has separate areas namely an activation area 32 as well as a regular area 34 with several different guiding means 70. In the activation area 32 the pillar formed guiding means 70 in form of guiding pillars 72 have an increased activation contact surface ACS with a bigger diameter than the guiding pillars 72 of the regular area 34. This has several positive effects. The first effect is that the increased activation contact surface ACS in the central part of the inlet transition section 30 increases the resistance for the fluid flow FF and thereby balances the distribution of the fluid flow FF over the complete wide central section 40. Even more important is the fact that the increased activation contact surface ACS comparing to a significantly smaller regular contact surface RCS now enables a higher electrical as well as a higher thermal conductivity to a membrane 112 which would be placed between this plate and a further plate, for example the one depicted in figure 6. Thereby at least the activation area 32 now fulfils the parameters to be activated and used additionally for the electrochemical fuel cell functionality over the membrane 112. This can in particular be achieved by extending a central membrane 112 over the transition section 30 or at least the activation area 32 and thereby increasing the overall available surface area or square section to provide the active fuel cell functionality.

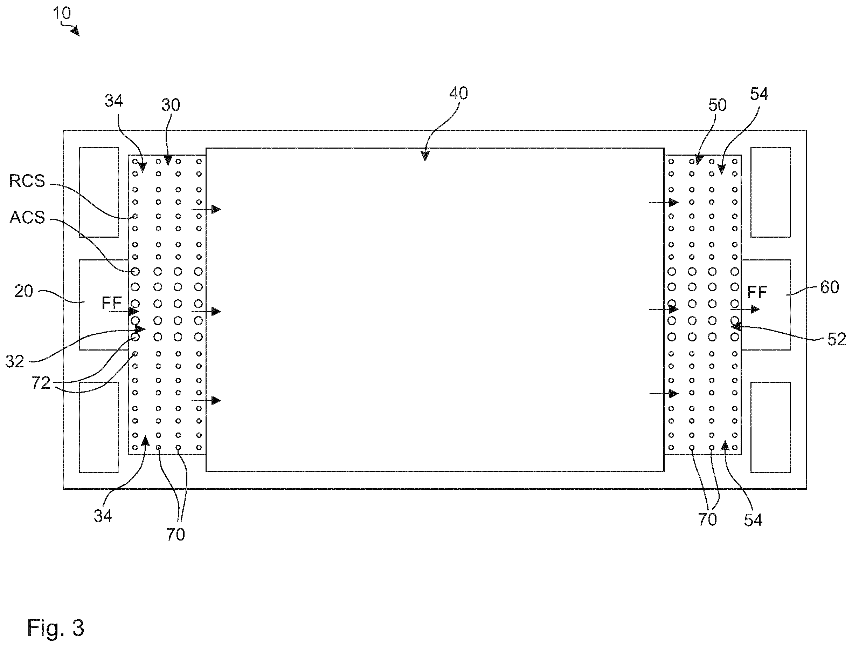

In figure 3 the embodiment of figure 2 is developed even further. In this case a more or less identical geometrical separation is also conducted and provided in the outlet transition section 50. The activation area 52 and the regular area 54 are more or less similar to the activation area 32 and the regular area 34 of the inlet transition section 30. Overall, this leads to an even further extension of the active surface of the plate device 10 and thereby the increase or the optimization of the efficiency can be increased even further.

In figures 2 and 3 the pillars 72 in the middle of the transition section 30 are increased in size. This is done to improve electrical and thermal conduction. But it is also done to add more flow resistance, thereby directing flow towards the outer edges of the plate device 10. This results in improved flow distribution.

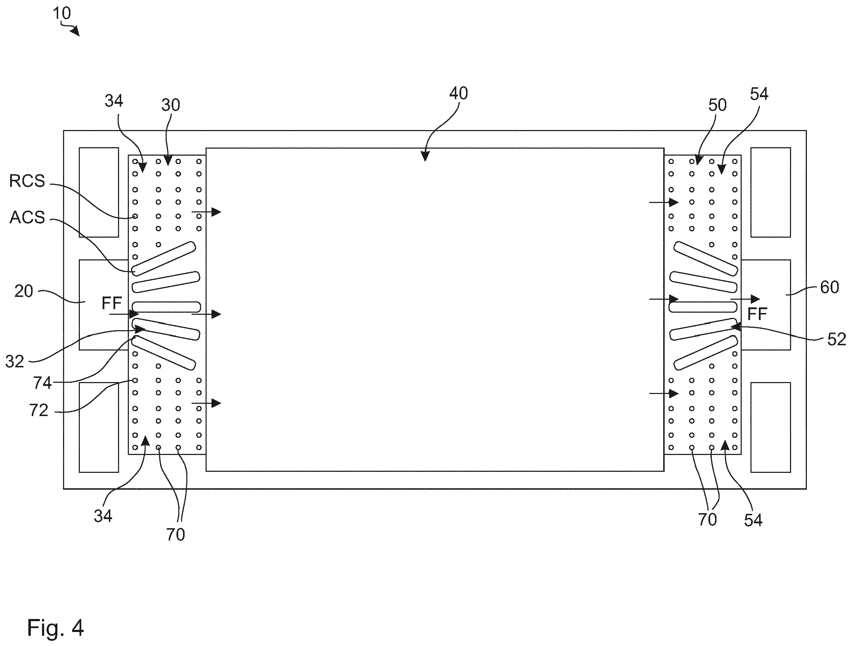

In figure 4 a different form for the guiding means 70 in the activation area 32 is depicted. Here the guiding means 70 are constructed to form guiding channels 74 opening up and spreading the flow to have an even more optimized guiding functionality for the fluid flow FF in this part of the inlet transition section 30 as well as the outlet transition section 50. Overall, it can be seen that the activation contact surface ACS is increased even further meaning the necessary values in terms of the electrical and thermal conductivity are increased thereby in the same manner. It can be essential to spread the flow in cross direction with central inlet ports 20 and outlet ports 60.

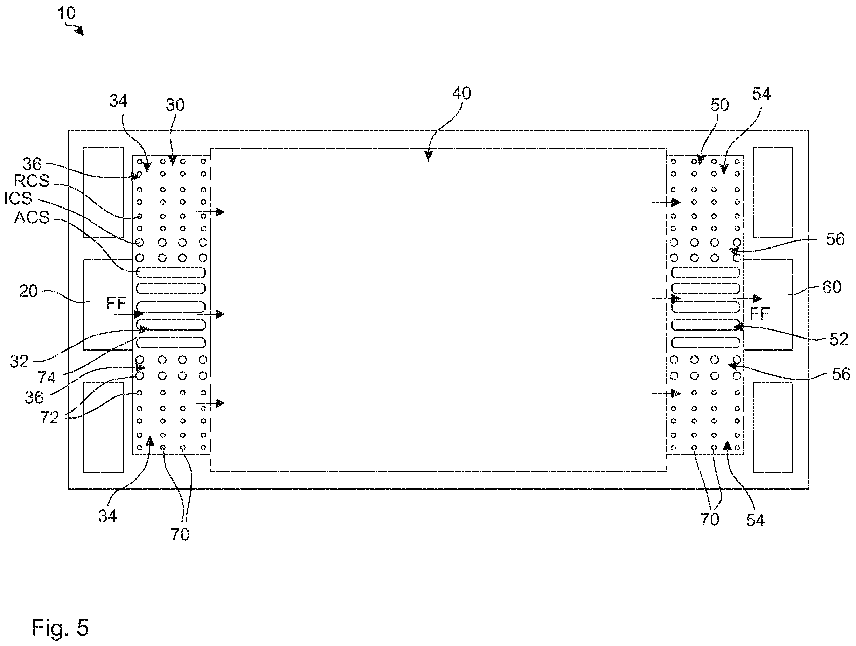

In figure 5 a further development is depicted. Here between the activation area 32 and the regular area 34 an intermediate area 36 as well as an intermedia area 56 in the outlet transition section 56 can be seen. Those comprise an intermediate contact surface ICS having the same size as the regular contact surface RCS but still of the same size as the activation contact surface ACS. This allows an intermediate influence and an intermediate change of the thermal conductivity changing slowly from the regular area 34, 54 to the activation area 32, 52.

Even though not shown in the figures, it is very advantageous if the number of pillars 72 does not change when their size is changed, i.e. the number of pillars 72 should always be the same. The resistance mainly increases by reducing the flow gap between bigger pillars 72.

In figure 6, a different construction of the inlet transition section 30 and the outlet transition section 50 can be seen. Here the increased flow resistance for the fluid flow FF is caused by reducing the flow gap between bigger pillars 72 and is provided in the outer edges of the respective inlet transition section 30 or the outlet transition section 50. This leads to two separate activation areas 32 and a central single regular area 34 as well as two outside located activation areas 52 and one central regular area 54 at the outlet transition section 50.

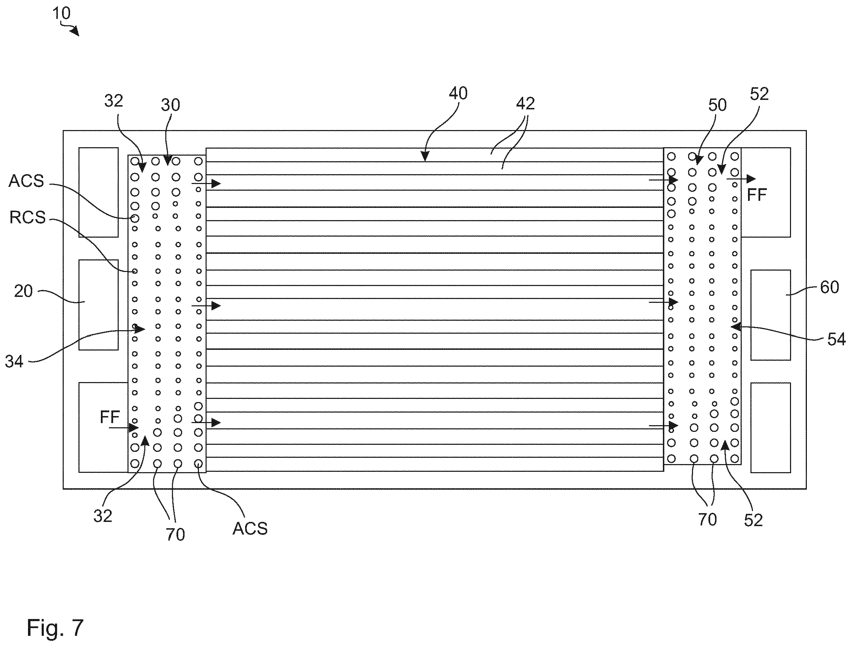

In figure 7 the same solution for the two transition sections 30 and 50 can be seen but now there are aligned with central channels 42 of the central section 40.

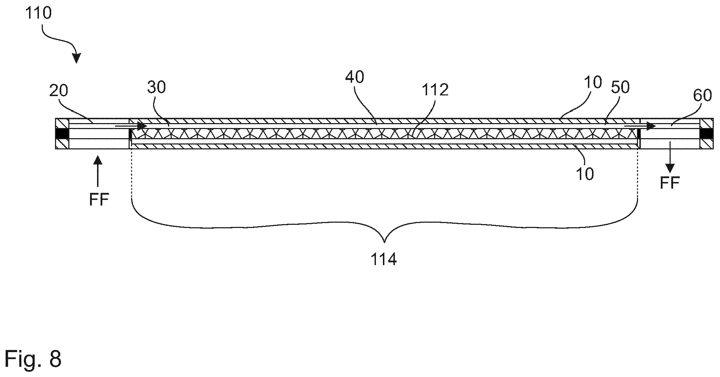

Figure 8 shows a further solution for the use of the plate devices in a fuel cell 110. Now two plate devices 10 are positioned above and below a membrane 112 having the gaseous functionality to provide the electrochemical fuel cell functionality. As it can be seen the membrane 112 extends not only all the way along the central section 40 but overlaps at least partly with the inlet transition section 30 and the outlet transition section 50. In other words, now the functionality area 114 for providing the electrochemical fuel cell functionality extends also along the central section 40 as well as the inlet transition section 30 and the outlet transition section 50 increasing the overall geometrical use and efficiency of such a fuel cell. The fluid flow FF can enter the fuel cell 110 along a channel inside the inlet port 50 and can exit via an outlet port 60 in a respective outlet channel.

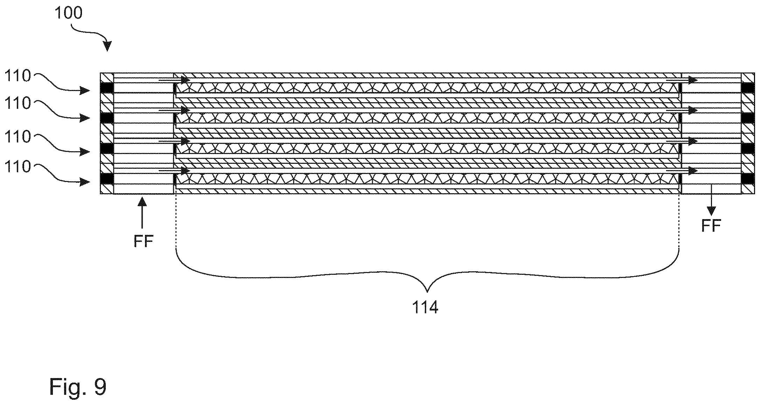

Figure 9 shows a solution of a fuel cell stack 100, here with an example of four fuel cells 110 according to figure 8. As it can be seen now a fluid flow FF for example a fuel, air, oxygen, water, or something else being a medium for running the fuel cell stack 100 can enter as a fluid flow FF. It is distributed via a channel an enters each of the fuel cells 110 through the respective inlet port 20 as well as the respective inlet transition section 30. On the right side of the fuel cell stack all of those fluid flows FF are again collected via the respective outlet port 60 in a common channel and will exit the fuel cell stack 100 for example at the lower end with the fluid flow FF. The functionality area 114 is not only increased for one of those fuel cells but for all of the fuel cells 110 of the fuel cell stack 100 and thereby the overall efficiency of the fuel cell stack 100 is increased significantly. Usually, the fluid flow FF at the inlet and at the outlet is always on the same end of the fuel cell stack 100. Although theoretically a diagonal arrangement is better from flow uniformity, it is never applied in PEM fuel cell stacks 100 for sever disadvantages of sealing spatial requirements.

Further, the inventive fuel cell stack 100 comprises coolant passages which usually are created by passages between bipolar plates.

The present invention is described by the aforesaid embodiment only by the way of example.

### Reference signs

- 10: plate device
- 20: inlet port
- 30: inlet transition section
- 32: activation area
- 34: regular area
- 36: intermediate area
- 40: central section
- 42: central channel
- 50: outlet transition section
- 52: activation area
- 54: regular area
- 56: intermediate area
- 60: outlet port
- 70: guiding means
- 72: guiding pillar
- 74: guiding channel

- 100: fuel cell stack
- 110: fuel cell
- 112: membrane
- 114: functionality area

- FF: fluid flow
- ACS: activation contact surface
- RCS: regular contact surface
- ICS: intermediate contact surface

## Claims

1. Plate device (10) for an electrochemical fuel cell (110) in a fuel cell stack (100), comprising at least one inlet port (20) for receiving a fluid flow (FF) within the fuel cell stack (100), an inlet transition section (30) for each inlet port (20) receiving the fluid flow (FF) from the at least one inlet port (20) and distributing it to a central section (40) providing the electrochemical fuel cell functionality, an outlet transition section (50) for each inlet port (20), receiving the fluid flow (FF) from the central section (40) and guiding it to at least one outlet port (60), wherein the inlet transition section (30) and the outlet transition section (50) comprise guiding means (70) for guiding the fluid flow (FF) across the inlet transition section (30) and the outlet transition section (40), **characterised in that** the inlet transition section (30) and/or the outlet transition section (50) comprise at least one activation area (32, 52) additionally providing the electrochemical fuel cell functionality and being separate from a regular area (34, 54) wherein the guiding means (70) in the activation area (32, 52) comprise an activation contact surface (ACS) to contact an adjacent membrane (112) of the fuel cell (110) and wherein the activation contact surface (ACS) is greater than a regular contact surface (RCS) of the guiding means (70) in the regular area (34, 54). and wherein the guiding means (70) in the activation area (32, 54) have a different geometrical form, in particular forming guiding channels (74), than the guiding means (70) in the regular area (34, 54), in particular forming guiding pillars (72).

2. Plate device (10) according to claim 1, **characterised in that** the activation area (32, 52) extends between the at least one inlet port (20) and/or the at least one outlet port (60) on one side and at least a part of the central section (40) on the other side.

3. Plate device (10) according to any of the preceding claims, **characterised in that** the guiding means (70) are shaped in a pillar form and/or are arranged in square array.

4. Plate device (10) according to any of the preceding claims, **characterised in that** the activation area (32, 52) is geometrically corelated with central channels (42) being provided in the central section (40) to guide the fluid flow (FF).

5. Plate device (10) according to any of the preceding claims, **characterised in that** at least two separate activation areas (32, 52) are provided within at least one of the inlet transition section (30) and/or the outlet transition section (50).

6. Plate device (10) according to any of the preceding claims, **characterised in that** the activation area (32, 52) covers between 30% and 90%, preferably between 40% and 80% of the inlet transition section (30) and/or the outlet transition section (50).

7. Plate device (10) according to any of the preceding claims, **characterised in that** the inlet transition section (30) and the outlet transition section (50) both comprise at least one activation area (32, 52).

8. Plate device (10) according to claim 7, **characterised in that** the at least one activation area (32) of the inlet transition section (30) has an identical or in general identical geometrical extension as the activation area (52) of the outlet transition section (50), in particular having identical or in general identical geometrical forms of the guiding means (70).

9. Plate device (10) according to any of the preceding claims, **characterised in that** between the activation area (32, 52) and the regular area (34, 54) of the inlet transition section (30) and/or the outlet transition section (50) an intermediate area (36, 56) is provided having guiding means (70) with changing intermediate contact surfaces (ICS), changing from the regular contact surface (RCS) to the activation contact surface (ACS).

10. . Fuel cell (110) for providing an electrochemical fuel cell functionality, having an electrochemical membrane (112) and **characterised by** having one plate device (10) with the features of any of claims 1 to 9 on both sides of the membrane (112).

11. Fuel cell (110) according to claim 10, **characterised in that** the membrane (112) provides a functionality area (114) which provides the electrochemical fuel cell functionality, wherein the functionality area (114) covers ate least partly the inlet transition section (30) and/or the outlet transition section (50).

12. Fuel cell (110) according to claim 11, **characterised in that** the functionality area (114) extends across the at least one activation area (32), in particular not across the regular area (34).

13. Fuel cell (110) according to one of claims 10 to 12, **characterised in that** both plate devices (10) comprise corresponding activation areas (32)

14. Fuel cell stack (100) having multiple fuel cells (110) stacked upon each other to provide an electrochemical fuel cell functionality, **characterised in that** the fuel cells (110) comprise the features of one of claims 10 to 13.

## Patentansprüche

1. Plattenvorrichtung (10) für eine elektrochemische Brennstoffzelle (110) in einem Brennstoffzellenstapel (100), umfassend zumindest eine Einlassöffnung (20) zum Aufnehmen eines Fluidstroms (FF) innerhalb des Brennstoffzellenstapels (100), einen Einlassübergangsabschnitt (30) für jede Einlassöffnung (20), der den Fluidstrom (FF) von der zumindest einen Einlassöffnung (20) aufnimmt und ihn zu einem Zentralabschnitt (40) verteilt, der die elektrochemische Brennstoffzellenfunktionalität bereitstellt, einen Auslassübergangsabschnitt (50) für jede Einlassöffnung (20), der den Fluidstrom (FF) von dem Zentralabschnitt (40) aufnimmt und ihn zu zumindest einer Auslassöffnung (60) führt, wobei der Einlassübergangsabschnitt (30) und der Auslassübergangsabschnitt (50) Führungsmittel (70) zum Führen des Fluidstroms (FF) über den Einlassübergangsabschnitt (30) und den Auslassübergangsabschnitt (40) umfassen, **dadurch gekennzeichnet, dass** der Einlassübergangsabschnitt (30) und/oder der Auslassübergangsabschnitt (50) zumindest einen Aktivierungsbereich (32, 52) umfassen, der zusätzlich die elektrochemische Brennstoffzellenfunktionalität bereitstellt und von einem regulären Bereich (34, 54) getrennt ist, wobei die Führungsmittel (70) in dem Aktivierungsbereich (32, 52) eine Aktivierungskontaktfläche (ACS) umfassen, um eine benachbarte Membran (112) der Brennstoffzelle (110) zu kontaktieren, und wobei die Aktivierungskontaktfläche (ACS) größer ist als eine reguläre Kontaktfläche (RCS) der Führungsmittel (70) in dem regulären Bereich (34, 54), und wobei die Führungsmittel (70) in dem Aktivierungsbereich (32, 54) eine andere geometrische Form haben, insbesondere Führungskanäle (74) bildend, als die Führungsmittel (70) in dem regulären Bereich (34, 54), insbesondere Führungssäulen (72) bildend.

2. Plattenvorrichtung (10) nach Anspruch 1, **dadurch gekennzeichnet, dass** sich der Aktivierungsbereich (32, 52) zwischen der zumindest einen Einlassöffnung (20) und/oder der zumindest einen Auslassöffnung (60) auf der einen Seite und zumindest einem Teil des Zentralabschnitts (40) auf der anderen Seite erstreckt.

3. Plattenvorrichtung (10) nach einem der vorhergehenden Ansprüche, **dadurch gekennzeichnet, dass** die Führungsmittel (70) in einer Säulenform geformt sind und/oder in quadratischer Anordnung angeordnet sind.

4. Plattenvorrichtung (10) nach einem der vorhergehenden Ansprüche, **dadurch gekennzeichnet, dass** der Aktivierungsbereich (32, 52) geometrisch mit Zentralkanälen (42) korreliert ist, die in dem Zentralabschnitt (40) zum Führen des Fluidstroms (FF) vorgesehen sind.

5. Plattenvorrichtung (10) nach einem der vorhergehenden Ansprüche, **dadurch gekennzeichnet, dass** zumindest zwei getrennte Aktivierungsbereiche (32, 52) innerhalb zumindest eines von dem Einlassübergangsabschnitt (30) und/oder dem Auslassübergangsabschnitt (50) vorgesehen sind.

6. Plattenvorrichtung (10) nach einem der vorhergehenden Ansprüche, **dadurch gekennzeichnet, dass** der Aktivierungsbereich (32, 52) zwischen 30 % und 90 %, vorzugsweise zwischen 40 % und 80 % des Einlassübergangsabschnitts (30) und/oder des Auslassübergangsabschnitts (50) bedeckt.

7. Plattenvorrichtung (10) nach einem der vorhergehenden Ansprüche, **dadurch gekennzeichnet, dass** der Einlassübergangsabschnitt (30) und der Auslassübergangsabschnitt (50) beide zumindest einen Aktivierungsbereich (32, 52) umfassen.

8. Plattenvorrichtung (10) nach Anspruch 7, **dadurch gekennzeichnet, dass** der zumindest eine Aktivierungsbereich (32) des Einlassübergangsabschnitts (30) eine identische oder im Allgemeinen identische geometrische Ausdehnung wie der Aktivierungsbereich (52) des Auslassübergangsabschnitts (50) hat, insbesondere mit identischen oder im Allgemeinen identischen geometrischen Formen der Führungsmittel (70).

9. Plattenvorrichtung (10) nach einem der vorhergehenden Ansprüche, **dadurch gekennzeichnet, dass** zwischen dem Aktivierungsbereich (32, 52) und dem regulären Bereich (34, 54) des Einlassübergangsabschnitts (30) und/oder des Auslassübergangsabschnitts (50) ein Zwischenbereich (36, 56) vorgesehen ist, der Führungsmittel (70) mit sich ändernden Zwischenkontaktflächen (ICS) hat, die sich von der regulären Kontaktfläche (RCS) zu der Aktivierungskontaktfläche (ACS) ändern.

10. Brennstoffzelle (110) zum Bereitstellen einer elektrochemischen Brennstoffzellenfunktionalität, die eine elektrochemische Membran (112) hat und **gekennzeichnet durch** eine Plattenvorrichtung (10) mit den Merkmalen eines der Ansprüche 1 bis 9 auf beiden Seiten der Membran (112).

11. Brennstoffzelle (110) nach Anspruch 10, **dadurch gekennzeichnet, dass** die Membran (112) einen Funktionalitätsbereich (114) bereitstellt, der die elektrochemische Brennstoffzellenfunktionalität bereitstellt, wobei der Funktionalitätsbereich (114) zumindest teilweise den Einlassübergangsabschnitt (30) und/oder den Auslassübergangsabschnitt (50) bedeckt.

12. Brennstoffzelle (110) nach Anspruch 11, **dadurch gekennzeichnet, dass** sich der Funktionalitätsbereich (114) über den zumindest einen Aktivierungsbereich (32) erstreckt, insbesondere nicht über den regulären Bereich (34).

13. Brennstoffzelle (110) nach einem der Ansprüche 10 bis 12, **dadurch gekennzeichnet, dass** beide Plattenvorrichtungen (10) korrespondierende Aktivierungsbereiche (32) umfassen

14. Brennstoffzellenstapel (100) mit mehreren aufeinander gestapelten Brennstoffzellen (110) zum Bereitstellen einer elektrochemischen Brennstoffzellenfunktionalität, **dadurch gekennzeichnet, dass** die Brennstoffzellen (110) die Merkmale eines der Ansprüche 10 bis 13 umfassen.

## Revendications

1. Dispositif de plaque (10) pour une pile à combustible électrochimique (110) dans un empilement de piles à combustible (100), comprenant au moins un orifice d'entrée (20) pour recevoir un flux de fluide (FF) à l'intérieur de l'empilement de piles à combustible (100), une section de transition d'entrée (30) pour chaque orifice d'entrée (20) recevant le flux de fluide (FF) provenant de l'au moins un orifice d'entrée (20) et le distribuant à une section centrale (40) fournissant la fonctionnalité électrochimique de pile à combustible, une section de transition de sortie (50) pour chaque orifice d'entrée (20), recevant le flux de fluide (FF) provenant de la section centrale (40) et le guidant vers au moins un orifice de sortie (60), dans lequel la section de transition d'entrée (30) et la section de transition de sortie (50) comprennent des moyens de guidage (70) pour guider le flux de fluide (FF) à travers la section de transition d'entrée (30) et la section de transition de sortie (40), **caractérisé en ce que** la section de transition d'entrée (30) et/ou la section de transition de sortie (50) comprennent au moins une zone d'activation (32, 52) fournissant en outre la fonctionnalité électrochimique de pile à combustible et étant séparée d'une zone régulière (34, 54), dans lequel les moyens de guidage (70) dans la zone d'activation (32, 52) comprennent une surface de contact d'activation (ACS) pour contacter une membrane adjacente (112) de la pile à combustible (110) et dans lequel la surface de contact d'activation (ACS) est supérieure à une surface de contact régulière (RCS) des moyens de guidage (70) dans la zone régulière (34, 54), et dans lequel les moyens de guidage (70) dans la zone d'activation (32, 54) ont une forme géométrique différente, en particulier formant des canaux de guidage (74), de celle des moyens de guidage (70) dans la zone régulière (34, 54), en particulier formant des piliers de guidage (72).

2. Dispositif de plaque (10) selon la revendication 1, **caractérisé en ce que** la zone d'activation (32, 52) s'étend entre l'au moins un orifice d'entrée (20) et/ou l'au moins un orifice de sortie (60) d'un côté et au moins une partie de la section centrale (40) de l'autre côté.

3. Dispositif de plaque (10) selon l'une quelconque des revendications précédentes, **caractérisé en ce que** les moyens de guidage (70) sont formés en une forme de pilier et/ou sont agencés en réseau carré.

4. Dispositif de plaque (10) selon l'une quelconque des revendications précédentes, **caractérisé en ce que** la zone d'activation (32, 52) est géométriquement corrélée à des canaux centraux (42) prévus dans la section centrale (40) pour guider le flux de fluide (FF).

5. Dispositif de plaque (10) selon l'une quelconque des revendications précédentes, **caractérisé en ce qu'**au moins deux zones d'activation séparées (32, 52) sont prévues dans au moins l'une de la section de transition d'entrée (30) et/ou de la section de transition de sortie (50).

6. Dispositif de plaque (10) selon l'une quelconque des revendications précédentes, **caractérisé en ce que** la zone d'activation (32, 52) couvre entre 30 % et 90 %, de préférence entre 40 % et 80 % de la section de transition d'entrée (30) et/ou de la section de transition de sortie (50).

7. Dispositif de plaque (10) selon l'une quelconque des revendications précédentes, **caractérisé en ce que** la section de transition d'entrée (30) et la section de transition de sortie (50) comprennent toutes deux au moins une zone d'activation (32, 52).

8. Dispositif de plaque (10) selon la revendication 7, **caractérisé en ce que** l'au moins une zone d'activation (32) de la section de transition d'entrée (30) a une étendue géométrique identique ou globalement identique à celle de la zone d'activation (52) de la section de transition de sortie (50), en particulier avec des formes géométriques identiques ou globalement identiques des moyens de guidage (70).

9. Dispositif de plaque (10) selon l'une quelconque des revendications précédentes, **caractérisé en ce qu'**entre la zone d'activation (32, 52) et la zone régulière (34, 54) de la section de transition d'entrée (30) et/ou de la section de transition de sortie (50) est prévue une zone intermédiaire (36, 56) ayant des moyens de guidage (70) avec des surfaces de contact intermédiaires (ICS) changeantes, changeant de la surface de contact régulière (RCS) à la surface de contact d'activation (ACS).

10. Pile à combustible (110) pour fournir une fonctionnalité électrochimique de pile à combustible, ayant une membrane électrochimique (112) et **caractérisée par** un dispositif de plaque (10) présentant les caractéristiques de l'une quelconque des revendications 1 à 9 des deux côtés de la membrane (112).

11. Pile à combustible (110) selon la revendication 10, **caractérisée en ce que** la membrane (112) fournit une zone de fonctionnalité (114) qui fournit la fonctionnalité électrochimique de pile à combustible, dans laquelle la zone de fonctionnalité (114) couvre au moins partiellement la section de transition d'entrée (30) et/ou la section de transition de sortie (50).

12. Pile à combustible (110) selon la revendication 11, **caractérisée en ce que** la zone de fonctionnalité (114) s'étend à travers l'au moins une zone d'activation (32), en particulier pas à travers la zone régulière (34).

13. Pile à combustible (110) selon l'une des revendications 10 à 12, **caractérisée en ce que** les deux dispositifs de plaque (10) comprennent des zones d'activation correspondantes (32)

14. Empilement de piles à combustible (100) ayant plusieurs piles à combustible (110) empilées les unes sur les autres pour fournir une fonctionnalité électrochimique de pile à combustible, **caractérisé en ce que** les piles à combustible (110) comprennent les caractéristiques de l'une des revendications 10 à 13.
